# EUROPÄISCHE PATENTSCHRIFT

(11) **EP 2 612 059 B1**
(45) Veröffentlichungstag und Bekanntmachung des Hinweises auf die Patenterteilung: **02.04.2014**
(21) Anmeldenummer: 11801560.1
(22) Anmeldetag: 20.08.2011
(51) Int. Cl.: F16H 61/12, F16H 61/688

(54) **VORRICHTUNG UND VERFAHREN ZUR REGELUNG EINES DOPPELKUPPLUNGSGETRIEBES**
DEVICE AND METHOD FOR CONTROLLING A DUAL-CLUTCH TRANSMISSION
DISPOSITIF ET PROCÉDÉ DE RÉGULATION D'UNE TRANSMISSION À DOUBLE EMBRAYAGE

(30) Priorität: 02.09.2010 DE 102010044280
(43) Veröffentlichungstag der Anmeldung: 10.07.2013
(73) Patentinhaber: Conti Temic Microelectronic GmbH, 90411 Nürnberg (DE)
(72) Erfinder: GÜRTLER, Thomas, 90480 Nürnberg (DE); ULBRICH, Uwe, 91286 Obertrubach (DE); HABEL, Stephan, 90530 Wendelstein bei Nürnberg (DE); SCHOLL, Gregor, 90419 Nürnberg (DE)
(74) Vertreter: Bonn, Roman Klemens
(86) Internationale Anmeldenummer: PCT/DE2011/001640
(87) Internationale Veröffentlichungsnummer: WO 2012/037921

(56) Entgegenhaltungen:
- EP-A1- 1 176 329
- EP-A2- 2 077 401
- WO-A2-03/019047
- "Innovatives Doppelkupplungssystem fuer Sportwagen", ATZ AUTOMOBILTECHNISCHE ZEITSCHRIFT, VIEWEG PUBLISHING, WIESBADEN, DE, Bd. 111, Nr. 4, 1. April 2009 (2009-04-01) , Seiten 252-261, XP001521129, ISSN: 0001-2785

## Beschreibung

Die Erfindung betrifft eine Vorrichtung und ein Verfahren zur Regelung eines Doppelkupplungsgetriebes nach den Oberbegriffen der unabhängigen Ansprüche.

Es existieren verschiedene Konzepte, ein Steuergerät insbesondere zur Regelung eines Doppelkupplungsgetriebes in einem Kraftfahrzeug einzelsicherfrei bzw. eigensicher zu gestalten. Eine Möglichkeit die Eigensicherheit eines Steuergerätes zu erreichen ist die Überwachung im 3-Ebenen Konzept.

Aus der DE 44 38 714 A1 sind ein Verfahren und eine Vorrichtung zur Steuerung einer Antriebseinheit eines Fahrzeugs bekannt. Hierbei weist das Steuergerät zur Leistungssteuerung ein einziges Rechnerelement auf. Das Rechnerelement führt sowohl die Steuerung als auch die Überwachung durch. Betriebssicherheit und Verfügbarkeit werden dabei dadurch sicher gestellt, dass zur Durchführung der Steuerung und der Überwachung wenigstens zwei, voneinander unabhängige Ebenen in einem Rechnerelement vorgesehen sind, wobei in einer ersten Ebene die Funktionen zur Leistungssteuerung bestimmt und in einer zweiten Ebene, insbesondere in Zusammenarbeit mit einem Überwachungsmodul , diese Funktionen und somit die Funktionsfähigkeit des Rechnerelements selbst überwacht werden.

Innovatives Doppelkupplungssystem für Sportwagen, ATZ, April 2009 offenbart die Merkmale des Oberbegriffes der Ansprüche 1 und 10.

Zusätzlich wird in der DE 44 38 714 A1 eine dritte Ebene beschrieben, die eine Ablaufkontrolle der zweiten Ebene durchführt. Diese Überwachung durch die dritte Ebene steigert die Zuverlässigkeit und Verfügbarkeit des Steuergerätes. Insbesondere wird im Überwachungsmodul die Ablaufkontrolle als Frage-Antwort-Kommunikation zwischen Überwachungsmodul und Rechnerelement ausgeführt.

Das 3-Ebenen Überwachungskonzept (EGAS-Konzept) setzt sich bei Steuergeräten von Fahrzeugen zur Überwachung elektronischer Systeme immer mehr durch.

Dabei besteht das Steuergerät aus dem sog. Funktions- oder Hauptrechner und dem Überwachungsrechner. Funktionsrechner und Überwachungsrechner kommunizieren über ein Frage-Antwort-Verfahren. Darüber hinaus verfügen sie über separate Abschaltpfade für die leistungsbestimmenden Endstufen.

Die Ebene 1 umfasst das eigentliche Funktionsmodul zur Funktionssteuerung der Antriebseinheit des Fahrzeugs. Sie wird daher auch als Funktionsebene bezeichnet. Sie beinhaltet insbesondere Motorsteuerungsfunktionen, u. a. zur Umsetzung der angeforderten Motormomente, Komponentenüberwachungen, die Diagnose der Ein- und Ausgangsgrößen, sowie die Steuerung der Systemreaktionen im erkannten Fehlerfall. Die Ebene 1 wird auf dem Funktionsrechner ausgeführt.

Die Ebene 2, auch als Funktions-Überwachungsebene bezeichnet, umfasst das Sicherheitsmodul und wird ebenfalls auf dem Funktionsrechner ausgeführt. Sie erkennt den fehlerhaften Ablauf überwachungsrelevanter Umfänge des Funktionsmoduls der Ebene 1, u. a. durch die Überwachung der berechneten Momente oder der Fahrzeugbeschleunigung. Im Fehlerfall erfolgt die Auslösung von Systemreaktionen.

Die Ebene 2 wird in einem durch die Ebene 3 abgesicherten Hardwarebereich des Funktionsrechners durchgeführt. Die Ebene 3, auch Rechner-Überwachungsebene genannt, umfasst insbesondere das Überwachungsmodul auf einem unabhängigen Überwachungsrechner mit Befehlssatztest, Programmablaufkontrolle, A/D Wandler-Test sowie zyklische und vollständige Speichertests der Ebene 2. Das Überwachungsmodul wird auf einem Überwachungsrechner ausgeführt. Der vom Funktionsrechner unabhängige Überwachungsrechner testet durch ein Frage-Antwort-Verfahren die ordnungsgemäße Abarbeitung der Programmbefehle des Funktionsrechners. Im Fehlerfall erfolgt die Auslösung von Systemreaktionen unabhängig vom Funktionsrechner.

Dieses Überwachungskonzept kann sowohl in Motorsteuergeräten als auch in Getriebesteuergeräten insbesondere für mechanisch eigensichere Systeme verwendet werden. Das heißt in einem konkreten Fall für ein Getriebe mit einer Kupplung, die im drucklosen Zustand gegen eine mechanische Federkraft geöffnet ist, ist im Notfall, wenn die leistungsbestimmenden Endstufen abgeschaltet sind und das hydraulische System zur Betätigung der Kupplung nicht mehr zur Verfügung steht, dennoch der beabsichtigte Notfallzustand erreicht wird, dass die Kupplung durch die mechanische Federkraft dauerhaft im geöffneten Zustand gehalten wird und somit kein Moment vom Motor zu den Antriebsrädern übertragbar ist.

Es gibt jedoch Getriebetypen, in denen im drucklosen Zustand die Kupplung gegen eine mechanische Federkraft geschlossen ist, so genannte" normally closed" Kupplungen, bei denen dieses Überwachungskonzept in der Form dann nicht angewendet werden kann.

Es stellt sich daher die Aufgabe, ein einfache, kostengünstige und zuverlässige Vorrichtung für ein mechanisch nicht eigensicheres System, insbesondere für ein Doppelkupplungsgetriebe mit einer "normally closed" Kupplung zu schaffen.

Erfindungsgemäß wird die Aufgabe gelöst durch eine Vorrichtung mit den Merkmalen des unabhängigen Anspruchs 1.

Beim Auftreten eines sicherheitsrelevanten Fehlers in einem Doppelkupplungsgetriebe mit einer ersten, "normally closed" Kupplung und einer zweiten , "normally open" Kupplung wird ein Notfallbetrieb ausgelöst. Im Notfallbetrieb regelt eine Nebensteuereinheit, die einen analogen Regler zur Regelung eines Proportionalventils und einen weiteren analogen Regler zur Regelung einer Hydraulikpumpe umfasst, mittels dieser analogen Regler das Öffnen der ersten "normally closed" Kupplung. Da die zweite Kupplung eine "normally open" Kupplung ist, also im drucklosen Zustand gegen eine mechanische Feder immer im geöffneten Zustand gehalten wird, ist daher gewährleistet, dass im Notfallbetrieb kein Moment vom Motor zu den Antriebsrädern übertragen wird. Ein weitere Vorteil der Erfindung ist, dass der Hauptrechner , die Überwachungseinheit und die Nebensteuereinheit auf einem gemeinsamen Schaltungsträger in einem einzigen Steuergerät angeordnet sind. Neben dem Kosten- und Raumeinsparungseffekt hat dieses Konzept gegenüber Sicherheitskonzepten, bei denen die Nebensteuereinheit in einem separaten Steuergerät untergebracht ist, den Vorteil, dass die in der Regel fehleranfällige Abstimmung zwischen den zwei separaten Steuergerätenentfällt. Hinzu kommt, dass bei der Verwendung eines einzigen Steuergerätes , die elektrischen Verbindungen wie Leitungen und Stecker, die zur Verbindung von zwei separaten Steuergeräten notwendig sind, als mögliche Fehlerquellen ebenfalls entfallen.

Zur Erhöhung der Sicherheit weisen der Hauptrechner und die Nebensteuereinheit getrennte Stromversorgungen aufweisen.

Ein besonderer Vorteil dieses Sicherheitskonzeptes ist, dass zur Regelung der ersten Kupplung im Notfallbetrieb keine Software benötigt wird, sondern lediglich analoge Standart-Hardwarebauteile verwendet werden können. So umfasst die Nebensteuereinheit einen analogen Regelungsteil zum Regeln des Hydraulikdrucks im hydraulischen System mittels der Drehzahl der Hydraulikpumpe. Weiterhin umfasst die Nebensteuereinheit einen analogen Logikteil zum Entscheiden, ob der vorliegende Betriebszustand dem Normalbetrieb oder dem Notfallbetrieb entspricht. Der analoge Schaltungsteil der Nebensteuereinheit bewerkstelligt insbesondere den Wechsel vom Betriebszustand Normalbetrieb zum Betriebszustand Notfallbetrieb.

Weiterhin weist die Vorrichtung leistungsbestimmende Endstufen zur Steuerung der Hydraulikpumpe und des Proportionalventils für den Normalbetrieb auf. Beim Auslösen des Notfallbetriebes können diese Endstufen stromlos geschaltet werden. Dann sind vorteilhafterweise die weiteren, redundanten leistungsbestimmenden Endstufen der Vorrichtung zur Steuerung der Hydraulikpumpe und des Proportionalventils für den Notfallbetrieb jeweils bestrombar. Dadurch wird sichergestellt, dass insbesondere beim Ausfall des Hauptrechners keine fehlerhaften Signale vom Hauptrechner über die Endstufen für den Normalbetrieb an die erste Kupplung gelangen können.

Um sicherzustellen, dass entweder nur die leistungsbestimmenden Endstufen für den Normalbetrieb oder nur die redundanten leistungsbestimmenden Endstufen für den Notfallbetrieb bestromt sind, sind die Gates der FET's der jeweiligen Endstufen durch die Nebensteuereinheit wechselseitig jeweils in einen leitenden oder einen sperrenden Zustand umschaltbar.

Den besonders einfachen und sicheren Charakter der Vorrichtung macht aus, dass im Notfallbetrieb keine intelligente Schaltung benötigt wird. Vielmehr sind in der Nebensteuereinheit Führungsgrößen eingeprägt, die durch die Auswahl der elektronischen Bauteile der Nebensteuereinheit festgelegt sind. Das Proportionalventil und die Hydraulikpumpe sind durch die analogen Regler mittels dieser Führungsgrößen regelbar.

In der Nebensteuereinheit ist die Steuerlogik der analogen Regler so aufgebaut, dass bei einem Neustart des Hauptrechners durch Spannungswiederkehr am Hauptrechner die Übernahme der Kontrolle über die erste Kupplung und die Hydraulikpumpe durch die analogen Regler der Nebensteuereinheit ausgeschlossen ist, und dass bei jedem anderen Neustart des Hauptrechners der vorhergehende Betriebszustand der Nebensteuereinheit erhalten bleibt. Dies hat den Vorteil, dass bei jedem anderen Neustart des Hauptrechners zur Sicherheit zuerst ein Notfallbetrieb angenommen wird. Im Anschluss daran kann dann auf der Basis der an der Nebensteuereinheit anliegenden Eingangssignale entschieden werden, ob tatsächlich ein Notfallbetrieb vorliegt, oder ob in den Normalbetrieb gewechselt werden kann.

Eine erste Bedingung zum Auslösen eines Notfallbetriebes durch den Hauptrechner kann insbesondere eine Systemreaktion der Funktions-Überwachungsebene oder der Überwachungssoftware im Hauptrechner sein.

Eine weitere Bedingung zum Auslösen eines Notfallbetriebes durch die Überwachungseinheit kann insbesondere eine mehrfach nicht korrekte Beantwortung einer Frage aus dem Frage-Antwort-Spiel zwischen der Überwachungseinheit und dem Hauptrechner sein. Dabei kann zum Beispiel die zulässige Anzahl von nicht korrekten Antworten vorher festgelegt werden.

Eine weitere Aufgabe ist es, ein einfaches, kostengünstiges und zuverlässiges Verfahren für ein mechanisch nicht eigensicheres System, insbesondere für ein Doppelkupplungsgetriebe mit einer "normally closed" Kupplung zu schaffen.

Erfindungsgemäß wird die Aufgabe gelöst durch ein Verfahren mit den Merkmalen des unabhängigen Anspruchs 10.

In dem erfindungsgemäßen Verfahren zur Regelung eines Doppelkupplungsgetriebes in einem Fahrzeug mit einer Vorrichtung, die einen Hauptrechner und eine Überwachungseinheit zur Überwachung des Hauptrechners umfasst, wird unter bestimmten Bedingungen zum Auslösen eines Notfallbetriebes des Kraftfahrzeugs eine Nebensteuereinheit entweder durch den Hauptrechner oder durch die Überwachungseinheit angesteuert. Die Nebensteuereinheit, die sowohl einen analogen Regler zur Regelung eines Proportionalventils und als auch einen weiteren analogen Regler zur Regelung einer Hydraulikpumpe umfasst, regelt im Notfallbetrieb die erste, als "normally closed" ausgeführte Kupplung des Doppelkupplungsgetriebes mittels der besagten analogen Regler.

Ein besonderer Vorteil dieses Verfahrens ist, dass zur Regelung der ersten Kupplung im Notfallbetrieb keine Software benötigt wird, sondern lediglich analoge Standart-Hardwarebauteile verwendet werden können.

Nachdem ein Notfallbetrieb ausgelöst worden ist, trifft insbesondere der analoge Logikteil der Nebensteuereinheit anhand der vorliegenden Eingangssignale die Entscheidung, ob der vorliegende Betriebszustand einem Normalbetrieb oder einem Notfallbetrieb entspricht. Im Falle eines Notfallbetriebs wird ein analoges Schaltungsteil der Nebensteuereinheit angesteuert, welches dann vom Normalbetrieb in der Notfallbetrieb schaltet.

Beim Wechsel vom Normalbetrieb in den Notfallbetrieb werden die leistungbestimmenden Endstufen für den Normalbetrieb zur Steuerung der Hydraulikpumpe und des Proportionalventils durch die Nebensteuereinheit stromlos geschaltet werden und die weiteren redundanten, leistungsbestimmenden Endstufen für den Notfallbetrieb zur Steuerung der Hydraulikpumpe und des Proportionalventils durch die Nebensteuereinheit bestromt. Dabei steuert aus Sicherheitsgründen im Notfallbetrieb die Nebensteuereinheit die jeweiligen FET's der ersten leistungsbestimmenden Endstufen für den Normalbetrieb und der weiteren redundante Endstufen derart an, dass die Gates der FET's wechselseitig jeweils in einen leitenden oder einen sperrenden Zustand geschaltet werden.

Ein weiterer Sicherheitsaspekt ist, dass beim Neustart des Hauptrechners, durch Spannungswiederkehr am Hauptrechner, die Übernahme der Kontrolle über die erste, "normally closed" Kupplung und die Hydraulikpumpe durch die entsprechenden analogen Regler der Nebensteuereinheit ausgeschlossen wird. Bei jedem anderen Neustart des Hauptrechners bleibt jedoch der vorhergehende Betriebszustand der Nebensteuereinheit erhalten. Wie weiter oben schon erläutert, hat den Vorteil, dass bei jedem anderen Neustart des Hauptrechners zuerst ein Notfallbetrieb angenommen wird, und im Anschluss daran auf der Basis der anliegenden Eingangssignale entschieden wird, ob tatsächlich ein Notfallbetrieb vorliegt, oder ob in den Normalbetrieb gewechselt werden kann.

Ein Ausführungsbeispiel der Erfindung wird nachfolgend anhand der Zeichnung näher erläutert. Die einzige Figur zeigt eine schematische Darstellung für den Normalbetrieb und für den Notfallbetrieb.

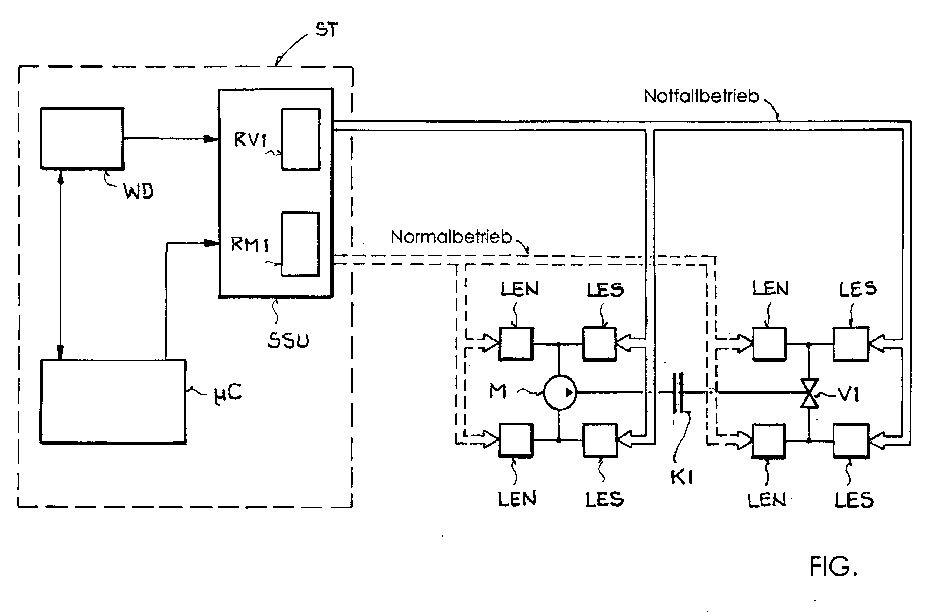

Die Fig. 1 zeigt die wesentlichen Komponenten einer Vorrichtung zur Regelung eines Doppelkupplungsgetriebes in einem Kraftfahrzeug mit einer ersten, "normally closed" Kupplung (K1) und einer zweiten, nicht gezeigten "normally open" Kupplung (K2). Ein Hauptrechner (µC), eine Überwachungseinheit (WD) und eine Nebensteuereinheit (SSU) sind auf einem gemeinsamen Schaltungsträger (ST) angeordnet. Der Hauptrechner (µC) dient insbesondere zur Regelung des Normalbetriebes des Fahrzeugs. Die Überwachungseinheit (WD) dient im wesentlichen zur Überwachung des Hauptrechners (µC), insbesondere zur Programmablaufkontrolle durch eine Frage-Antwort-Kommunikation zwischen Überwachungseinheit (WD) und Hauptrechner (µC).

Der Schaltungsträger (ST) umfasst auch eine Nebensteuereinheit (SSU), die unter bestimmten Bedingungen zum Auslösen eines Notfallbetriebes des Kraftfahrzeugs entweder durch den Hauptrechner (µC) oder durch die Überwachungseinheit (WD) angesteuert werden kann. Die Nebensteuereinheit (SSU) umfasst einen analogen Regler (RV1) zur Regelung eines Proportionalventils (V1) und einen analogen Regler (RM1) zur Regelung der Hydraulikpumpe (M).

In Fig. 1 zeigt die gestrichelte Doppellinie den Signalverlauf im Normalbetrieb. Das Doppelkupplungsgetriebe weist eine erste hydraulische Kupplung (K1) und eine nicht gezeigte, zweite hydraulische Kupplung (K2) auf. Die erste Kupplung (K1) ist eine "normally closed" Kupplung, das heißt sie ist im drucklosen Zustand durch Federkraft geschlossen. Die zweite Kupplung (K2) ist eine "normally open" Kupplung, das heißt, sie wird im drucklosen Zustand durch Federkraft offen gehalten. Im Normalbetrieb werden die beiden Kupplungen (K1, K2) durch den Hauptrechner (µC) geregelt.

Dazu werden insbesondere zur Regelung der ersten Kupplung (K1) im Normalbetrieb die leistungsbestimmenden Endstufen (LEN) für die Hydraulikpumpe (M) bestromt, und sie erhalten die Signale zur Steuerung der Hydraulikpumpe (M) vom analogen Regler (RM1). Ebenfalls zur Regelung der ersten Kupplung (K1) werden die leistungsbestimmenden Endstufen (LEN) für das Proportionalventil (V1) bestromt, und diese erhalten die Signale zur Steuerung des Proportionalventils (V1) vom analogen Regler (RV1).

Zum Auslösen eines Notfallbetriebes wird unter bestimmten Bedingungen die Nebensteuereinheit (SSU) entweder vom Hauptrechner (µC) oder von der Überwachungseinheit (WD) angesteuert. Zum Beispiel kann dies als eine Systemreaktion der Funktions-Überwachungsebene oder der Überwachungssoftware durch den Hauptrechner (µC) geschehen. Andererseits kann der Notfallbetrieb insbesondere auf Grund einer mehrfach nicht korrekten Beantwortung einer Frage aus dem Frage-Antwort-Spiel zwischen der Überwachungseinheit (WD) und dem Hauptrechner (µC) durch die Überwachungseinheit (WD) geschehen.

Im Notfallbetrieb soll zwischen Motor und Antriebsrädern kein Moment übertragen werden. Für einen Doppelkupplungsgetriebe mit zwei "normally open" Kupplungen würde es genügen, wenn die entsprechenden leistungsbestimmenden Endstufen (LEN) für die Hydraulikpumpe (M) und die der entsprechenden Proportionalventile (V1, V2) zum Beispiel durch den Hauptrechner (µC) stromlos geschaltet werden. Dadurch würden beide Kupplungen (K1, K2) drucklos und durch die Federkraft geöffnet werden.

Im vorliegenden, erfindungsgemäßen Fall jedoch ist die erste Kupplung (K1) im drucklosen Zustand aus Energiespargründen gegen die Federkraft geschlossen. Daher ist es erforderlich, die erste Kupplung (K1) im Notfallbetrieb insbesondere durch die Nebensteuereinheit (SSU) zuverlässig geregelt zu öffnen.

Der Notfallbetrieb wird in der Fig. 1 durch die durchgezogene Doppellinie dargestellt. Die leistungsbestimmenden Endstufen (LEN) zur Steuerung der Hydraulikpumpe (M) und des Proportionalventils (V1) für den Normalbetrieb werden beim Auslösen des Notfallbetriebes stromlos geschaltet. Gleichzeitig werden die redundanten, leistungsbestimmenden Endstufen (LES) zur Steuerung der Hydraulikpumpe (M) und des Proportionalventils (V1) für den Notfallbetrieb bestromt. Nun wird die erste Kupplung (K1) ausschließlich durch die Nebensteuereinheit (SSU) mittels der Regler (RV1) und (RM1) geregelt.

Die leistungsbestimmenden Endstufen (LEN) für den Normalbetrieb und leistungsbestimmenden Endstufen (LES) für den Notfallbetrieb weisen jeweils FET's (FETN, FETS) auf, deren Gates durch die Nebensteuereinheit (SSU) wechselseitig jeweils in einen leitenden oder einen sperrenden Zustand umgeschaltet werden können. Im Notfallbetrieb sind vorzugsweise die FET's (FETN) sperrend und die FET's (FET's) leitend geschaltet. Dadurch ist insbesondere sichergestellt, dass im Notfallbetrieb die Hydraulikpumpe (M) und das Proportionalventil (V1) zur Regelung der ersten Kupplung (K1) ausschließlich Signale von der Nebensteuereinheit (SSU) und nicht etwa eventuell fehlerbehaftete Signale vom eventuell defekten Hauptrechner (µC) erhalten.

Im Notfallbetrieb wird zur Regelung des Doppelkupplungsgetriebes keine intelligente Schaltung benötigt. Dies macht den besonders einfachen und sicheren Charakter der Vorrichtung aus. Vielmehr sind in der Nebensteuereinheit (SSU) durch die Auswahl ihrer elektronischen Bauteile Führungsgrößen festgelegt.Das Proportionalventil (V1) und die Hydraulikpumpe (M) sind durch die analogen Regler (RV1, RM1) vorteilhafterweise mittels dieser Führungsgrößen regelbar.

Im Falle eines Neustarts des Hauptrechners (µC) finden vorzugsweise einige Sicherheitsvorkehrungen vorgesehen. So ist in der Nebensteuereinheit (SSU) die Steuerlogik der analogen Regler (RM1, RV1) derart aufgebaut, dass bei einem Neustart des Hauptrechners (µC) durch Spannungswiederkehr am Hauptrechner (µC) die Übernahme der Kontrolle über die erste Kupplung (K1) und die Hydraulikpumpe (M) durch die analogen Regler (RM1, RV1) der Nebensteuereinheit (SSU) ausgeschlossen ist.

Ferner bleibt bei jedem anderen Neustart des Hauptrechners (µC) der vorhergehende Betriebszustand der Nebensteuereinheit (SSU) erhalten. Dies hat den Vorteil, dass bei jedem anderen Neustart des Hauptrechners (µC) zur Sicherheit zuerst ein Notfallbetrieb angenommen wird. Im Anschluss daran kann dann auf der Basis der an der Nebensteuereinheit (SSU) anliegenden Eingangssignale entschieden werden, ob tatsächlich ein Notfallbetrieb vorliegt, oder ob in den Normalbetrieb gewechselt werden kann.

Die vorliegende Erfindung wurde anhand der vorstehenden Beschreibung so dargestellt, um das Prinzip der Erfindung und dessen praktische Anwendung bestmöglich zu erklären. Jedoch lässt sich die Erfindung bei geeigneter Abwandlung selbstverständlich in zahlreichen anderen Ausführungsformen realisieren.

## Patentansprüche

1. Vorrichtung zur Regelung eines Doppelkupplungsgetriebes in einem Fahrzeug, umfassend
- einen Hauptrechner (µC) zur Regelung des Normalbetriebes des Fahrzeugs, der zum Auslösen eines Notfallbetriebes unter ersten Bedingungen (B1) eine Nebensteuereinheit (SSU) ansteuert,
- eine Überwachungseinheit (WD) zur Überwachung des Hauptrechners (µC),
die zum Auslösen eines Notfallbetriebes unter zweiten Bedingungen (B2) die Nebensteuereinheit (SSU) ansteuert,
- eine erste hydraulische Kupplung (K1) für die ungeraden Gänge, wobei die erste Kupplung (K1) im drucklosen Zustand durch Federkraft geschlossen ist,
- eine zweite hydraulische Kupplung (K2 z für die geraden Gänge, wobei die zweite Kupplung (K2) im drucklosen Zustand durch Federkraft geöffnet ist,
- eine Hydraulikpumpe (M), die das hydraulische System zum Regeln der Kupplungen (K1, K2) mit Hydraulikdruck versorgt,
- ein erste Proportionalventil (V1) zur Regelung des Hydraulikdrucks an der erste Kupplung (K1),
- ein zweite Proportionalventil (V2) zur Regelung des Hydraulikdrucks an der zweite Kupplung (K2),
**dadurch gekennzeichnet, dass**,
der Hauptrechner (µC), die Überwachungseinheit (WD) und die Nebensteuereinheit (SSU) auf einem gemeinsamen Schaltungsträger (ST) angeordnet sind, und dass die Nebensteuereinheit (SSU) einen ersten analogen Regler (RV1) zur Regelung des ersten Proportionalventils (V1) und einen zweiten analogen Regler (RM1) zur Regelung der Hydraulikpumpe (M) umfasst, und dass im Notfallbetrieb die erste Kupplung (K1) durch die Nebensteuereinheit (SSU) mittels der Regler (RV1, RM1) geregelt wird.

2. Vorrichtung nach Anspruch 1, **dadurch gekennzeichnet, dass** der Hauptrechner (µC) die Nebensteuereinheit (SSU) getrennte Stromversorgungen aufweisen.

3. Vorrichtung nach Anspruch 1 oder 2, **dadurch gekennzeichnet, dass** die Nebensteuereinheit (SSU) einen analogen Regelungsteil zum Regeln des Hydraulikdrucks im hydraulischen System mittels der Drehzahl der Hydraulikpumpe (M), einen analogen Logikteil zum Entscheiden, ob der vorliegende Betriebszustand dem Normalbetrieb oder dem Notfallbetrieb entspricht, und einen analogen Schaltungsteil zum Wechseln vom Betriebszustand Normalbetrieb zum Betriebszustand Notfallbetrieb umfasst.

4. Vorrichtung nach einem der vorhergehenden Ansprüche, **dadurch gekennzeichnet, dass** die Vorrichtung leistungsbestimmende Endstufen (LEN) zur Steuerung der Hydraulikpumpe (M) und des Proportionalventils (V1) für den Normalbetrieb umfasst, die beim Auslösen des Notfallbetriebes stromlos schaltbar sind, und dass die Vorrichtung redundante, leistungsbestimmende Endstufen (LES) zur Steuerung der Hydraulikpumpe (M) und des ersten Proportionalventils (V1) für den Notfallbetrieb umfasst, die beim Auslösen des Notfallbetriebes bestrombar sind.

5. Vorrichtung nach Anspruch 4, **dadurch gekennzeichnet, dass** die leistungsbestimmenden Endstufen (LEN) und (LES) jeweils FET's (FETN, FETS) umfassen, deren Gates durch die Nebensteuereinheit (SSU) wechselseitig jeweils in einen leitenden oder einen sperrenden Zustand umschaltbar sind.

6. Vorrichtung nach einem der vorhergehenden Ansprüche, **dadurch gekennzeichnet, dass**
in der Nebensteuereinheit (SSU) Führungsgrößen eingeprägt sind, die durch die Auswahl der elektronischen Bauteile der Nebensteuereinheit (SSU) festgelegt sind, und dass das erste Proportionalventil (V1) und die Hydraulikpumpe M durch die analogen Regler (RV1, RM1) mittels dieser Führungsgrößen regelbar sind.

7. Vorrichtung nach einem der vorhergehenden Ansprüche, **dadurch gekennzeichnet, dass** in der Nebensteuereinheit (SSU) die Steuerlogik der analogen Regler (RV1, RM1) so aufgebaut ist, dass
- bei Neustart des Hauptrechners (µC) durch Spannungswiederkehr am Hauptrechner (µC) die Übernahme der Kontrolle über die erste Kupplung (K1) und die Hydraulikpumpe (M) durch die analogen Regler (RV1, RM1) der Nebensteuereinheit (SSU) ausgeschlossen ist, und dass
- bei jedem anderen Neustart des Hauptrechners (µC) der vorhergehende Betriebszustand der Nebensteuereinheit (SSU) erhalten bleibt.

8. Vorrichtung nach einem der vorhergehenden Ansprüche, **dadurch gekennzeichnet, dass** die ersten Bedingungen (B 1) zum Auslösen eines Notfallbetriebes durch den Hauptrechner (µC) eine Systemreaktion der Funktions-Überwachungsebene oder der Überwachungssoftware im Hauptrechner (µC) ist.

9. Vorrichtung nach einem der Ansprüche 1 bis 7, **dadurch gekennzeichnet, dass** die zweiten Bedingung (B2) zum Auslösen eines Notfallbetriebes durch die Überwachungseinheit (WD) insbesondere die mehrfach nicht korrekte Beantwortung einer Frage aus dem Frage-Antwort-Spiel zwischen der Überwachungseinheit (WD) und dem Hauptrechner (µC) ist.

10. Verfahren zur Regelung eines Doppelkupplungsgetriebes in einem Fahrzeug, mittels einer Vorrichtung gemäß einem der vorhergehenden Ansprüche,
- wobei der Hauptrechner (µC) zum Auslösen eines Notfallbetriebes des Kraftfahrzeugs eine Nebensteuereinheit (SSU) unter ersten Bedingungen (B1) ansteuert, und
- wobei die Überwachungseinheit zum Auslösen eines Notfallbetriebes des Kraftfahrzeugs die Nebensteuereinheit (SSU) unter zweiten Bedingungen (B2) ansteuert, **dadurch gekennzeichnet, dass**
die Nebensteuereinheit (SSU), die den ersten analogen Regler (RV1) zur Regelung des Proportionalventils (V1) und den zweiten analogen Regler (RM1) zur Regelung der Hydraulikpumpe (M) umfasst, im Notfallbetrieb die erste Kupplung (K1) mittels der analogen Regler (RV1, RM1) regelt.

11. Verfahren nach Anspruch 10, **dadurch gekennzeichnet, dass** nachdem ein Notfallbetrieb ausgelöst worden ist, der analoge Logikteil der Nebensteuereinheit (SSU) entscheidet, ob der vorliegende Betriebszustand dem Normalbetrieb oder dem Notfallbetrieb entspricht, und im Falle des Notfallbetriebs ein analoges Schaltungsteil ansteuert und das analoge Schaltungsteil der Nebensteuereinheit (SSU) vom Normalbetrieb in der Notfallbetrieb schaltet.

12. Verfahren nach Anspruch 10 oder 11, **dadurch gekennzeichnet, dass** beim Wechsel vom Normalbetrieb in den Notfallbetrieb die leistungbestimmenden Endstufen (LEN) zur Steuerung der Hydraulikpumpe (M) und des ersten Proportionalventils (V1) durch die Nebensteuereinheit (SSU) stromlos geschaltet werden und die redundanten, leistungsbestimmenden Endstufen (LES) zur Steuerung der Hydraulikpumpe (M) und des ersten Proportionalventils (V1) durch die Nebensteuereinheit (SSU) bestromt werden.

13. Verfahren nach Anspruch 12, **dadurch gekennzeichnet, dass** im Notfallbetrieb die Nebensteuereinheit (SSU) die FET's (FETN, FETS) der leistungsbestimmenden Endstufen (LEN) und (LES) derart ansteuert, dass die Gates der FET's (FETN, FETS) wechselseitig jeweils in einen leitenden oder einen sperrenden Zustand geschaltet werden.

14. Verfahren nach einem der vorhergehenden Ansprüche 10 bis 13, **dadurch gekennzeichnet, dass**
- beim Neustart des Hauptrechners (µC) durch Spannungswiederkehr am Hauptrechner (µC) die Übernahme der Kontrolle über die erste Kupplung (K1) und die Hydraulikpumpe (M) durch die analogen Regler (RV1, RM1) der Nebensteuereinheit (SSU) ausgeschlossen wird, und dass
- bei jedem anderen Neustart des Hauptrechners (µC) der vorhergehende Betriebszustand der Nebensteuereinheit (SSU) erhalten bleibt.

## Claims

1. A device for automatically controlling a dual-clutch transmission in a vehicle comprising
• a central computer (µC) for automatically controlling the normal operation of the vehicle, which central computer (µC) drives a secondary control unit (SSU) in order to trigger an emergency mode under first conditions (B1),
• a monitoring unit (WD) for monitoring the central computer (µC), which monitoring unit (WD) drives the secondary control unit (SSU) in order to trigger an emergency mode under second conditions (B2),
• a first fluid flywheel (K1) for the odd gears, wherein, in the pressureless state, the first flywheel (K1) is closed by an elastic force,
• a second fluid flywheel (K2) for the even gears, wherein, in the pressureless state, the second flywheel (K2) is open by an elastic force,
• a hydraulic pump (M) delivering hydraulic pressure to the hydraulic system for automatically controlling the flywheels (K1, K2),
• a first proportional valve (V1) for automatically controlling the hydraulic pressure at the first flywheel (K1),
• a second proportional valve (V2) for automatically controlling the hydraulic pressure at the second flywheel (K2),
**characterized in that**
the central computer (µC), the monitoring unit (WD) and the secondary control unit (SSU) are arranged on a common circuit carrier (ST), and that the secondary control unit (SSU) comprises a first analog controller (RV1) for automatically controlling the first proportional valve (V1) and a second analog controller (RM1) for automatically controlling the hydraulic pump (M), and that, in the emergency mode, the first flywheel (K1) is automatically controlled by the secondary control unit (SSU) by means of the controllers (RV1, RM1).

2. The device according to claim 1, **characterized in that** the central computer (µC) and the secondary control unit (SSU) have separate power supply units.

3. The device according to claim 1 or 2, **characterized in that** the secondary control unit (SSU) comprises an analog control part for automatically controlling the hydraulic pressure in the hydraulic system by means of the speed of the hydraulic pump (M), an analog logical part for deciding whether or not the present operating state corresponds to normal operation or to the emergency mode, and an analog circuit part for switching from the operating state "normal operation" to the operating state "emergency mode".

4. The device according to any one of the preceding claims, **characterized in that** the device comprises power-determining output stages (LEN) for controlling the hydraulic pump (M) and the proportional valve (V1) for normal operation, which power-determining output stages (LEN) can be de-energized when the emergency mode is triggered, and that the device comprises redundant, power-determining output stages (LES) for controlling the hydraulic pump (M) and the first proportional valve (V1) for the emergency mode, which redundant, power-determining output stages (LES) can be energized when the emergency mode is triggered.

5. The device according to claim 4, **characterized in that** the power-determining output stages (LEN) and (LES) each comprise FET's (FETN, FETS), each of the gates of which can be reciprocally switched over to a conducting state or to a blocking state by the secondary control unit (SSU).

6. The device according to any one of the preceding claims, **characterized in that** command variables are impressed in the secondary control unit (SSU), said command variables being fixed by the selection of the electronic components of the secondary control unit (SSU), and that the first proportional valve (V1) and the hydraulic pump (M) can be automatically controlled by the analog controllers (RV1, RM1) by means of said command variables.

7. The device according to any one of the preceding claims, **characterized in that** in the secondary control unit (SSU), the control logic of the analog controllers (RV1, RM1) is designed such that
• in the event of a restart of the central computer (µC) through voltage recovery at the central computer (µC), the takeover of control of the first flywheel (K1) and the hydraulic pump (M) by the analog controllers (RV1, RM1) of the secondary control unit (SSU) is ruled out, and that
• in the event of any other restart of the central computer (µC), the previous operating state of the secondary control unit (SSU) is maintained.

8. The device according to any one of the preceding claims, **characterized in that** the first conditions (B1) for triggering an emergency mode by the central computer (µC) are a system response of the function monitoring layer or of the monitoring software in the central computer (µC).

9. The device according to any one of claims 1 to 7, **characterized in that** the second conditions (B2) for triggering an emergency mode by the monitoring unit (WD) are, in particular, multiple incorrect responses to a question in the dialog between the monitoring unit (WD) and the central computer (µC).

10. A method for automatically controlling a dual-clutch transmission in a vehicle by means of a device according to any one of the preceding claims,
• wherein the central computer (µC) drives a secondary control unit (SSU) under first conditions (B1) in order to trigger an emergency mode of the motor vehicle, and
• wherein the monitoring unit drives the secondary control unit (SSU) under second conditions (B2) in order to trigger an emergency mode of the motor vehicle, **characterized in that**
the secondary control unit (SSU), which comprises the first analog controller (RV1) for automatically controlling the proportional valve (V1) and the second analog controller (RM1) for automatically controlling the hydraulic pump (M), automatically controls the first flywheel (K1) in the emergency mode by means of the analog controllers (RV1, RM1).

11. The method according to claim 10, **characterized in that** the analog logical part of the secondary control unit (SSU) decides, after an emergency mode has been triggered, whether or not the present operating state corresponds to normal operation or to the emergency mode and, in the event of the emergency mode, drives an analog circuit part and the analog circuit part of the secondary control unit (SSU) switches from normal operation to the emergency mode.

12. The method according to claim 10 or 11, **characterized in that** when the operating state is switched from normal operation to the emergency mode, the power-determining output stages (LEN) for controlling the hydraulic pump (M) and the first proportional valve (V1) are de-energized by the secondary control unit (SSU), and the redundant, power-determining output stages (LES) for controlling the hydraulic pump (M) and the first proportional valve (V1) are energized by the secondary control unit (SSU).

13. The method according to claim 12, **characterized in that** in the emergency mode, the secondary control unit (SSU) drives the FET's (FETN, FETS) of the power-determining output stages (LEN) and (LES) such that the gates of the FET's (FETN, FETS) are each reciprocally switched over to a conducting state or to a blocking state.

14. The method according to any one of the preceding claims 10 to 13, **characterized in that**
• in the event of a restart of the central computer (µC) through voltage recovery at the central computer (µC), the takeover of control of the first flywheel (K1) and the hydraulic pump (M) by the analog controllers (RV1, RM1) of the secondary control unit (SSU) is ruled out, and that
• in the event of any other restart of the central computer (µC), the previous operating state of the secondary control unit (SSU) is maintained.

## Revendications

1. Dispositif de régulation d'une boîte de vitesses à double embrayage dans un véhicule, comprenant
- un ordinateur central (µC) pour la régulation du fonctionnement normal du véhicule qui pilote une unité de commande annexe (SSU) pour le déclenchement d'un fonctionnement d'urgence en présence de premières conditions (B1),
- une unité de surveillance (WD) pour la surveillance de l'ordinateur central (µC) qui pilote l'unité de commande annexe (SSU) pour le déclenchement d'un fonctionnement d'urgence en présence de deuxièmes conditions (B2),
- un premier embrayage hydraulique (K1) pour les rapports impairs, le premier embrayage (K1) étant fermé par force de ressort dans l'état sans pression,
- un deuxième embrayage hydraulique (K2) pour les rapports pairs, le deuxième embrayage (K2) étant ouvert par force de ressort dans l'état sans pression,
- une pompe hydraulique (M) qui alimente en pression hydraulique le système hydraulique pour la régulation des embrayages (k1, K2),
- une première soupape proportionnelle (V1) pour la régulation de la pression hydraulique sur le premier embrayage (K1),
- une deuxième soupape proportionnelle (V2) pour la régulation de la pression hydraulique sur le deuxième embrayage (K2),
**caractérisé en ce que**
l'ordinateur central (µC), l'unité de surveillance (WD) et l'unité de commande annexe (SSU) sont disposés sur un support de circuit (ST) commun, et **en ce que** l'unité de commande annexe (SSU) comprend un premier régulateur analogique (RV1) pour la régulation de la première soupape proportionnelle (V1) et un deuxième régulateur analogique (RM1) pour la régulation de la pompe hydraulique (M), et **en ce que**, dans le fonctionnement d'urgence, le premier embrayage (K1) est régulé par l'unité de commande annexe (SSU) au moyen des régulateurs (RV1, RM1).

2. Dispositif selon la revendication 1, **caractérisé en ce que** l'ordinateur central (µC) et l'unité de commande annexe (SSU) présentent des alimentations électriques séparées.

3. Dispositif selon la revendication 1 ou 2, **caractérisé en ce que** l'unité de commande annexe (SSU) comprend une partie de régulation analogique pour la régulation de la pression hydraulique dans le système hydraulique au moyen de la vitesse de rotation de la pompe hydraulique (M), une partie logique analogique pour décider si le présent état de fonctionnement correspond au fonctionnement normal ou au fonctionnement d'urgence, et une partie de circuit analogique pour passer de l'état de fonctionnement normal à l'état de fonctionnement d'urgence.

4. Dispositif selon une des revendications précédentes, **caractérisé en ce que** le dispositif comprend des étages finaux (LEN) définissant la puissance pour la commande de la pompe hydraulique (M) et de la soupape proportionnelle (V1) pour le fonctionnement normal qui, lors du déclenchement du fonctionnement d'urgence, peuvent être mis hors tension, et **en ce que** le dispositif comprend des étages finaux (LES) redondants définissant la puissance pour la commande de la pompe hydraulique (M) et de la première soupape proportionnelle (V1) pour le fonctionnement d'urgence qui peuvent être alimentés en courant lors du déclenchement du fonctionnement d'urgence.

5. Dispositif selon la revendication 4, **caractérisé en ce que** les étages finaux (LEN) et (LES) définissant la puissance comprennent chacun des FET (FETN, FETS) dont les grilles sont commutables par l'unité de commande annexe (SSU) alternativement respectivement dans un état conducteur ou dans un état bloquant.

6. Dispositif selon une des revendications précédentes, **caractérisé en ce que** des grandeurs de guidage sont mémorisées dans l'unité de commande annexe (SSU) et sont fixées par la sélection des composants électroniques de l'unité de commande annexe (SSU), et **en ce que** la première soupape proportionnelle (V1) et la pompe hydraulique (M) peuvent être régulées par les régulateurs (RV1, RM1) analogiques au moyen de ces grandeurs de guidage.

7. Dispositif selon une des revendications précédentes, **caractérisé en ce que**, dans l'unité de commande annexe (SSU), la logique de commande des régulateurs (RV1, RM1) analogiques est structurée de telle sorte que
- lors du redémarrage de l'ordinateur central (µC) par un retour de la tension sur l'ordinateur central (µC), la prise en charge du contrôle du premier embrayage (K1) et de la pompe hydraulique (M) par les régulateurs (RV1, RM1) analogiques de l'unité de commande annexe (SSU) est exclue, et **en ce que**
- lors de chaque autre redémarrage de l'ordinateur central (µC), l'état de fonctionnement précédent de l'unité de commande annexe (SSU) est maintenu.

8. Dispositif selon une des revendications précédentes, **caractérisé en ce que** les premières conditions (B1) de déclenchement d'un fonctionnement d'urgence par l'ordinateur central (µC) est une réaction du système du niveau de surveillance de fonction ou du logiciel de surveillance dans l'ordinateur central (µC).

9. Dispositif selon une des revendications 1 à 7, **caractérisé en ce que** les deuxièmes conditions (B2) de déclenchement d'un fonctionnement d'urgence par l'unité de surveillance (WD) est en particulier la réponse plusieurs fois incorrecte à une question issue du jeu question-réponse entre l'unité de surveillance (WD) et l'ordinateur central (µC).

10. Procédé de régulation d'une boîte de vitesses à double embrayage dans un véhicule au moyen d'un dispositif selon une des revendications précédentes,
- l'ordinateur central (µC) pilotant, pour le déclenchement d'un fonctionnement d'urgence du véhicule, une unité de commande annexe (SSU) en présence de premières conditions (B1), et
- l'unité de surveillance pilotant, pour le déclenchement d'un fonctionnement d'urgence du véhicule, l'unité de commande annexe (SSU) en présence de deuxièmes conditions (B2),
**caractérisé en ce que**
l'unité de commande annexe (SSU), qui comprend le premier régulateur analogique (RV1) pour la régulation de la soupape proportionnelle (V1) et le deuxième régulateur analogique (RM1) pour la régulation de la pompe hydraulique (M), régule dans le fonctionnement d'urgence le premier embrayage (K1) au moyen des régulateurs (RV1, RM1) analogiques.

11. Procédé selon la revendication 10, **caractérisé en ce que**, après qu'un fonctionnement d'urgence a été déclenché, la partie logique analogique de l'unité de commande annexe (SSU) décide si le présent état de fonctionnement correspond au fonctionnement normal ou au fonctionnement d'urgence et, en cas de fonctionnement d'urgence, pilote une partie de circuit analogique, et la partie de circuit analogique de l'unité de commande annexe (SSU) commute du fonctionnement normal vers le fonctionnement d'urgence.

12. Procédé selon la revendication 10 ou 11, **caractérisé en ce que**, lors du passage du fonctionnement normal au fonctionnement d'urgence, les étages finaux (LEN) définissant la puissance pour la commande de la pompe hydraulique (M) et de la première soupape proportionnelle (V1) sont mis hors tension par l'unité de commande annexe (SSU), et les étages finaux (LES) redondants définissant la puissance pour la commande de la pompe hydraulique (M) et de la première soupape proportionnelle (V1) sont alimentés en courant par l'unité de commande annexe (SSU).

13. Procédé selon la revendication 12, **caractérisé en ce que**, dans le fonctionnement d'urgence, l'unité de commande annexe (SSU) pilote les FET (FETN, FETS) des étages finaux (LEN) et (LES) définissant la puissance de telle sorte que les grilles des FET (FETN, FETS) sont commutées alternativement respectivement dans un état conducteur ou dans un état bloquant.

14. Procédé selon une des revendications précédentes 10 à 13, **caractérisé en ce que**
- lors du redémarrage de l'ordinateur central (µC) par un retour de la tension sur l'ordinateur central (µC), la prise en charge du contrôle du premier embrayage (K1) et de la pompe hydraulique (M) par les régulateurs (RV1, RM1) analogiques de l'unité de commande annexe (SSU) est exclue, et **en ce que**
- lors de chaque autre redémarrage de l'ordinateur central (µC), l'état de fonctionnement précédent de l'unité de commande annexe (SSU) est maintenu.
